# EUROPÄISCHE PATENTSCHRIFT

(11) **EP 2 576 326 B1**
(45) Veröffentlichungstag und Bekanntmachung des Hinweises auf die Patenterteilung: **11.06.2014**
(21) Anmeldenummer: 11725868.1
(22) Anmeldetag: 27.05.2011
(51) Int. Cl.: B62D 55/108, B60G 11/18, B60G 17/02, B60G 11/20, B60G 3/14

(54) **KETTEN- ODER GLEISKETTENFAHRZEUG MIT EINER VORRICHTUNG ZUR DÄMPFUNG VON SCHWINGUNGEN DES KETTENLAUFWERKS**
CRAWLER OR TRACKED VEHICLE WITH A DEVICE FOR DAMPING THE VIBRATIONS OF THE TRACK DRIVE
VÉHICULE À CHENILLES AVEC UN DISPOSITIF D'AMORTISSEMENT DES VIBRATIONS DE L'ENTRAÎNEMENT DE LA CHENILLE

(30) Priorität: 31.05.2010 DE 102010022297
(43) Veröffentlichungstag der Anmeldung: 10.04.2013
(73) Patentinhaber: Rheinmetall Landsysteme GmbH, 29345 Unterlüß (DE)
(72) Erfinder: RIEDL, Jürgen, 86343 Königsbrunn (DE); MALL, Hans, 82256 Fürstenfeldbruck (DE)
(74) Vertreter: Dietrich, Barbara
(86) Internationale Anmeldenummer: PCT/EP2011/002629
(87) Internationale Veröffentlichungsnummer: WO 2011/151036

(56) Entgegenhaltungen:
- EP-A1- 0 937 634
- WO-A1-92/10375
- DE-A1- 2 818 226
- DE-A1- 4 123 778
- DE-C- 747 807
- FR-A- 903 120
- GB-A- 186 380

## Beschreibung

Die Erfindung beschäftigt sich mit der Dämpfung insbesondere einzelner Laufwerksrollen bzw. Laufwerksräder oder der Laufwerksträger eines Ketten- oder Gleiskettenfahrzeuges und schlägt vor, bisher verwendete lange Drehstabfedern in mehrere kleine Drehstabfedern aufzuteilen, um so Bauvolumen zu reduzieren.

Die Dämpfung der einzelnen Laufrollen wird nach dem Stand der Technik über je eine Drehstabfeder realisiert. Dabei ist diese über die gesamte Breite der Fahrzeugwanne auf der einen Seite verdrehfest mit dem Wannengehäuse und auf der anderen Seite mit dem drehbar gelagerten Tragarm der Laufrolle verbunden. Um einen Verdrehwinkel von ca. 100° erreichen zu können, beträgt die Länge der Drehstabfedern ca. 2- 2,5 m. Da die Drehstabfedern oberhalb des Wannenbodens gelagert und durch eine Abdeckung (Drehstabtunnel) geschützt werden, reduziert sich dadurch die nutzbare Höhe im Innenraum deutlich und führt dazu, dass das Betreten und der Aufenthalt einer Besatzung ab einer bestimmten Körperhöhe nur bedingt möglich ist.

Aus der DE 41 23 778 C2 sind Bemühungen bekannt, ganze Laufwerkskomponenten auf einem Laufwerksträger in Form von Modulen anzuordnen, die über Zug- und / oder Druckstreben miteinander verbunden sind, die ihrerseits unter oder über der Bodenplatte der Fahrzeugwanne quer zur Fahrzeuglängsachse angeordnet sind.

In Weiterführung derartiger Ansätze wird mit der EP 1 117 555 B2 vorgeschlagen, dass die gesamte Antriebseinheit in einer zugeordneten Seitenwandung der Fahrzeugwanne direkt oder über Abstandsringe gelagert ist, sodass für die bisherigen Streben kein Bauraum mehr unterhalb oder oberhalb der Bodenplatte benötigt wird. Die statischen Einheiten der Antriebseinheit sind ihrerseits durch Schwingungsdämpfungsmittel von der Fahrzeugwanne schwingungsmäßig entkoppelt. In der Praxis hat sich diese Lösung nicht groß durchsetzten können.

Entsprechend sind parallele Wege aus dem Stand der Technik bekannt, die Hydraulikzylinder zu verwenden, um so die Dämpfung ebenfalls nach außen zu verlegen. So wird In der DE 29 47 974 A1 eine Stabilisierungsanordnung für einen von einem Kettenlaufwerk getragenen Wannenaufbau eines Kettenfahrzeuges offenbart, deren hydraulisch stoßdämpfenden Mittel die Laufwerksrollen des Kettenlaufwerks abstützen.

Ein Hydrop-Element und die Verwendung in einem Fahrzeug mit Laufwerk und Laufwerksrollen ist auch der DE 103 28 541 A1 entnehmbar.

Auch wenn Wege vorgeschlagen werden, wie der Temperaturentwicklung In einem solchen Zylinder entgegengewirkt werden kann. z. B. DE 10 2008 026 680 A1 oder die bewegungsabhängige Dämpfung vorgesehen wird, bleibt das Temperaturproblem ein Funktionsproblem.

Aus der DE 28 18 226 A1 ist eine Federungsvorrichtung für Gleiskettenfahrzeuge bekannt, die, um von langen Drehstäben wegzukommen, für jede Tragrolle bzw. Zwillingstragrolie eine Federung vorsieht, die weniger Platz beansprucht und keinen Verlust im / an Innenraum verursacht. Dazu sind mehrere Torsionsdrehstäbe um eine zentrale Torsionsachse eingebunden, die über ihre gezahnten Enden miteinander verbunden sind. Diese Vorrichtung ist oberhalb der Laufräder eingebunden. Durch die drei In Reihe geschalteten Torsionselemente wird ein relativ langer Federweg erreicht. Nachteilig bei dieser Lösung Ist, dass die maximale Länge der Torsionsdrehstäbe durch die Breite der beiden Laufräder begrenzt ist.

Die EP 0 937 634 A1 betrifft ein Kettenfahrzeug mit Kettenrädern, die rechts und links am Fahrzeug angebracht sind und mittels Torsionsstäbe miteinander verbunden sind.

Die GB 186,380 A offenbart eine Fahrzeugradaufhängung mittels Torsionsstäben (Torsionsfedem), die in Längsrichtung oder quer zu einem Fahrzeugrahmen (Chassisrahmen) angebracht sind und In Verbindung mit einem oder beiden Rädern wirken.

Die Erfindung stellt sich daher die Aufgabe, eine bauraumsparende Vorrichtung für eine Dämpfung der Schwingungen aufzuzeigen.

Gelöst wird die Aufgabe durch die Merkmale des Patentanspruchs 1. Vorteilhafte Ausführungen zeigen die Unteransprüche auf.

Der Erfindung liegt die Idee Zugrunde, die langen, die Torsion aufnehmenden Drehstabfedem in mehrere kleinere Drehstabfedern aufzuteilen. Diese werden über bekannte Antriebsbzw. Übertragungselemente miteinander funktional verbunden und außerhalb des Innenraumes untergebracht. Dadurch wird für die Dämpfungseinrichtung kein Bauraum mehr quer und unterhalb der Fahrzeugwanne benötigt, maximal im Seitenbereich oder innerhalb einer geringfügigen Ausnehmung in der Wanne, einer sogenannten Wannennische.

Soll eine Torsion (Drehbewegung) von 40° aufgenommen werden, wird diese auf die einzelnen Drehstäbe derart verteilt, dass beispielsweise bei vier identischen Drehstäben Jeder 10° und bei beispielsweise fünf Drehstäben Jeder Drehstab bzw. jedes Drehstabfederrohr dann 8° der Drehbewegung aufnimmt. Unterschiedliche Drehstäbe sind aber auch möglich. Jedoch liegt der Vorteil von identischen, also gleichen Drehstäben darin, dass sie die Drehbewegung in gleichem Maße aufnehmen und diese dadurch gleichmäßig verteilt wird.

Die Aufteilung der Drehstabfedern kann in Form einer Reihenschaltung, in Form einer Parallelschaltung sowie in Kombinationen belder Formen erfolgen.

In einer bevorzugten Ausführung ist für jede Laufwerksrolle eine derartige Vorrichtung vorgesehen. Alternativ können aber auch die Laufwerksträger, die an den beiden Seitenwänden der Fahrzeugwanne angeordnet sind und die Laufwerkskomponenten aufnehmen, über derartige Vorrichtungen mit der Fahrzeugwanne verbunden werden.

Anhand eines Ausführungsbeispiels mit Zeichnung soll die Erfindung näher erläutert werden. Es zeigt:
- Fig. 1: eine Drehstabkonstruktion mit mehreren, parallel angeordneter Drehstäben - belastet,
- Fig. 2: die Drehstabkonstruktion aus Fig. 1 - entlastet,
- Fig. 3: eine schematische Seitendarstellung der Fahrzeugwanne mit der eingebundenen Vorrichtung aus Fig. 1,
- Fig. 4: eine Darstellung einer Drehstablängsanrodnung entlang der Fahrzeugwanne,
- Fig. 5: eine Variante der längsseitigen Drehstabanordnung in Form einer Reihenschaltung mehrerer Drehstäbe - in einer Draufsicht in Fahrtrichtung gesehen,
- Fig. 6: die Variante aus Fig. 5 in Verbindung mit der Fahrzeugwanne angedeutet,
- Fig. 7: eine Draufsichtdarstellung der geteilten Drehstäbe aus Fig. 1,
- Fig. 8: eine Draufsichtdarstellung der Variante der längs eingebundenen ganzen bzw. geteilten Drehstäbe,
- Fig. 9: eine Draufsichtdarstellung der Kombination der Einbindungen der Drehstäbe.

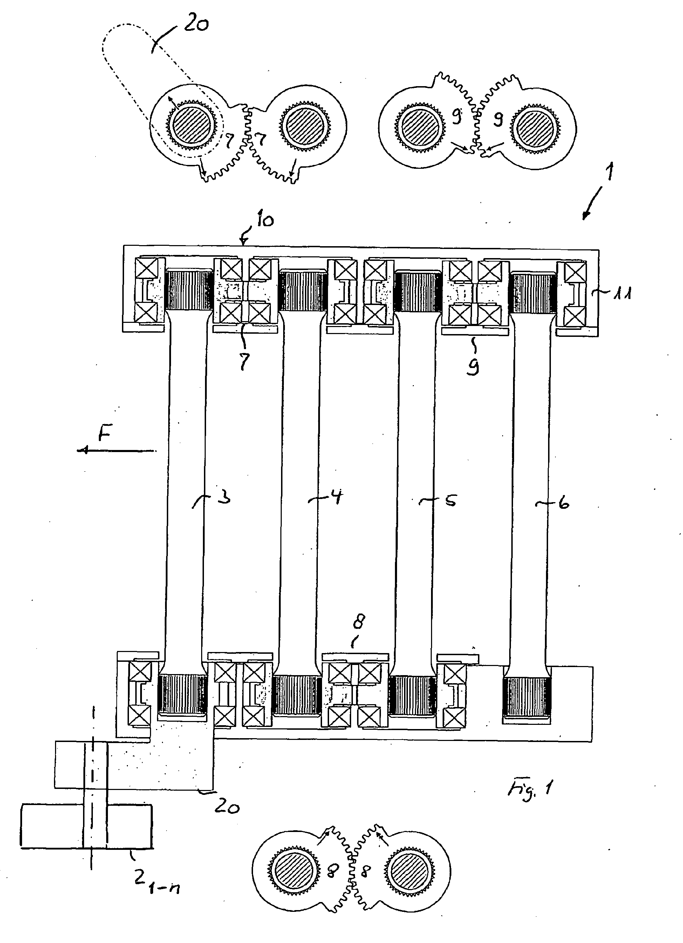

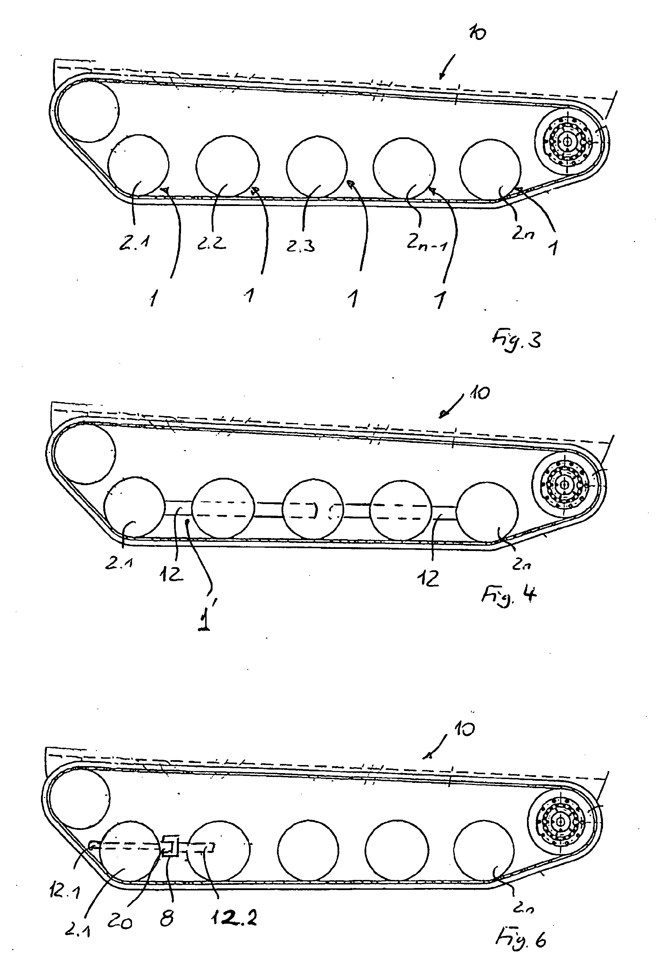

In Fig. 1 ist mit 1 eine Vorrichtung zur Dämpfung von Schwingungen eines Kettenlaufwerks mit mehreren Laufwerksrollen bzw. -räder 2ₙ eines Ketten- bzw. Gleiskettenfahrzeuges (schematisch Fig.3 dargestellt) gekennzeichnet. Die Vorrichtung 1 ist einerseits über Tragarme 20 mit der jeweiligen Laufwerksrolle 2ₙ und andererseits mit der Fahrzeugwanne 10 verbunden und weist mehrere, wenigstens zwei parallel angeordnete Drehfederstäbe 3, 4 (5, 6) auf, die über Antriebs- bzw. Übertragungsmittel 7, 8 (9) miteinander funktional verbindbar sind. Diese Übertragungs- oder Verbindungsmittel 7-9 sind frei wählbar und können beispielsweise Zahnriemen, Zahnräder, Hebelmechanismen, Ketten oder dergleichen sein. Die Darstellung ist in Fahrtrichtung und in einer Draufsicht lesbar.

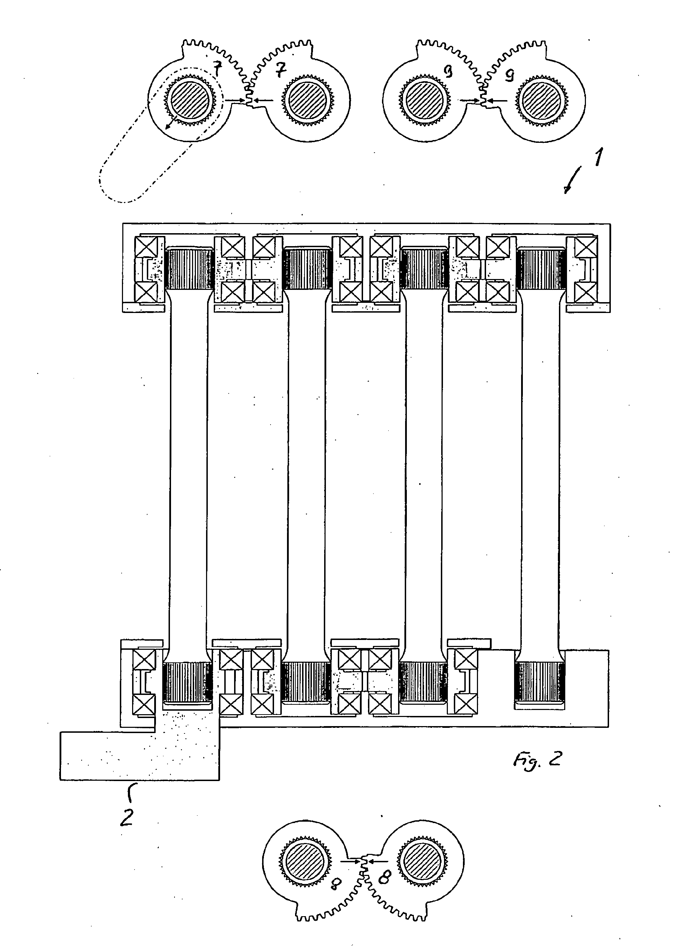

In Fig. 1 und 2 sind die Mittel 7-9 Zahnradpaare. Der Drehstab 3 steht dabei über das Zahnradpaar 7 mit dem Drehstab 4 in Wirkverbindung, der über das Zahnradpaar 8 wiederum mit dem Drehstab 5 in Wirkverbindung steht. Das Zahnradpaar 9 verbindet dann den Drehstab 6 mit dem Drehstab 5. Durch diese Anordnung verdreht sich jeder dieser Drehstäbe 3-6.

Die Drehstabfedern 3-6 sind bevorzugt identisch, auch in ihren Längen. Wurde eine Laufwerkrolle 2 bisher über eine 2.000 mm lange Drehstabfeder gedämpft, die einen Verdrehwinkel von 100° zuließ, werden nunmehr in der neuen Vorrichtung 1 beispielsweise vier identischen Drehstäbe 3 -6 mit einer Länge von beispielsweise 550 mm eingebunden. Der letzte Drehstab 6 ist im Wannengehäuse 11 gelagert. Jede Drehstabfeder 3-6 nimmt dann ihrerseits eine Verdrehung um 25° auf. Variable und damit unterschiedliche Längen der Drehstäbe 3- 6 sind ebenfalls möglich, erhöhen aufgrund der Verbindungsmittel 7-9 der Drehstäbe 3- 6 untereinander jedoch dann den konstruktiven Aufbau, wenn diese Drehstäbe 3-6 ausschließlich parallel zueinander ausgerichtet sind. Die Übertragungsmittel 7- 9 in Fig. 1 sind belastet. Fig. 2 zeigt dieselbe Vorrichtung 1 bei der die Übertragungsmittel 7-9 entlastet sind.

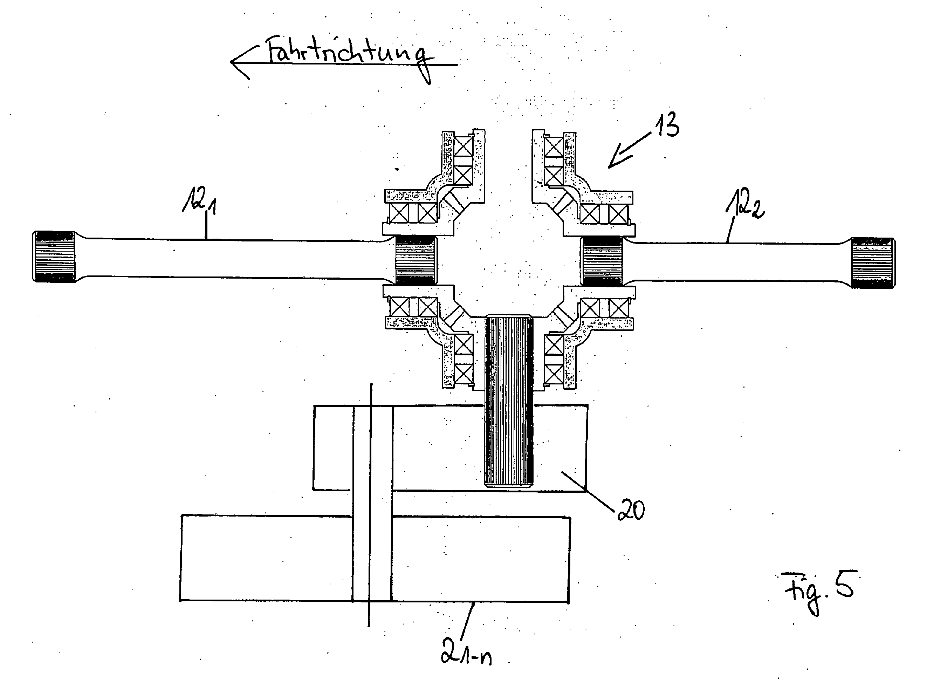

Insbesondere für das erste 2₁ und letzte Laufrad 2ₙ kann alternativ ein längs eingebundener Drehstab 12 (Drehstabfeder) als Vorrichtung 1' verwendet werden, der längs in Fahrzeugrichtung angebracht ist (Fig. 4). Dabei kann die Dämpfung des ersten 2₁ und des letzen Laufrades 2ₙ (je nach Länge der Wanne 10) auch des zweiten oder des vorletzten Laufrad über je einen Drehstab 12, dessen Torsionsbewegung über die bereits erwähnte Übertragungsmittel eingeleitet wird, übernommen werden. Der Drehstab 12 kann aber auch geteilt werden, wie in Fig. 5 dargestellt ist. Die Aufteilung der längs eingebundenen Drehstäbe 12 erfolgt dabei in mehrere 12₁, 12₂, wobei eine Reihenschaltungsweise bevorzugt wird. Die Drehstäbe 12₁ bis n sind ihrerseits dann mittels Übertragungselementen 13 miteinander funktional verbunden. Eine Einbindung an die Fahrzeugwanne 10 ist rein schemenhaft zur allgemeinen Visualisierung der Idee dargestellt.

Nur der Vollständigkeit halber sei darauf hingewiesen, dass die letztbeschriebene Teilung der längs der Fahrzeugwanne 10 auch für die Zwischenlaufräder 2₂ bis 2ₙ₋₁ genutzt werden kann.

Je nach Platzbedarf können die Drehstäbe somit wie bereits beschrieben in Reihenschaltung, Parallelschaltung als auch kombiniert in Parallel- und Reihenschaltung angeordnet werden. Es kann eine Kombination der Einbindung der Vorrichtung 1 sowie der Drehstäbe 12 ganz und unterteilt 12₁, 12₋ₙ erfolgen.

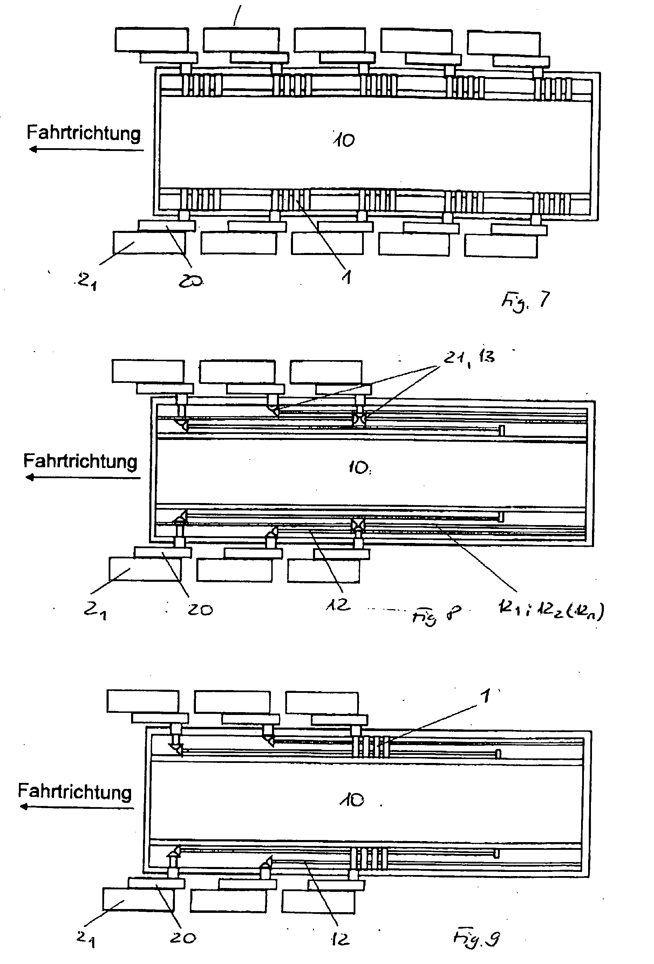

Die Fig. 7 bis 9 zeigen die verschiedenen Varianten und Möglichkeiten in einer Draufsichtdarstellung. Zwischen den Drehstäben und den Tragarmen ist jeweils ein Übertragungselement 13 und / oder Umlenkgetriebe 21.

In einer alternativen Variante kann die Vorrichtung 1 beidseitig der Fahrzeugwanne 10 eingebunden werden und ähnlich der DE 41 23 778 C2 die Aufgabe der Zug- und / oder Druckstreben übernehmen, sodass die Vorrichtung 1 nicht mit den einzelnen Laufwerksrollen 2 sondern mit den zu Laufwerksträgern zusammen geführten, beidseitig an der Fahrzeugwanne angebrachten Modulen in Wirkverbindung stehen und die Schwingungen aufnehmen (nicht näher dargestellt).

## Patentansprüche

1. Ketten- oder Gleiskettenfahrzeug mit wenigstens einer Vorrichtung (1, 1') zur Dämpfung von Schwingungen eines Kettenlaufwerks mittels Torslons- oder Drehfederstäben, die mehrere kleine oder kurze Drehfederstäbe (3-6. 12₁, 12ₙ), wenigstens jedoch zwei, umfasst, welche gegenüber der Fahrzeugwanne (10) ausgerichtet und über bekannte Antriebs- und / oder Übertragungselemente (7-9, 13) miteinander funktional verbunden sind, wobei die Drehfederstäbe (3-6) in Reihenschaltung, Parallelschaltung als auch kombiniert in Parallel- und Reihenschaltung angeordnet sind und die Torsions- oder Drehfederstäbe der Vorrichtung (1') außen längs an und / oder die Vorrichtung (1) in einer Seitennische In der Fahrzeugwanne (10) eingebunden ist.

2. Ketten- oder Gleiskettenfahrzeug mit wenigstens einer Vorrichtung nach Anspruch 1, **dadurch gekennzeichnet, dass** der erste Drehfederstab (3, 12₁) an einem Trägerarm (20) einer Laufwerksrolle (2₁₋ₙ) angebunden und der letzte Drehfederstab (6, 12ₙ) im oder am Wannengehäuse (11) gelagert Ist.

3. Ketten- oder Gleiskettenfahrzeug mit wenigstens einer Vorrichtung nach Anspruch 2, **dadurch gekennzeichnet, dass** zwischen den Drahfederstäben (3-9, 12₁, 12ₙ) und den Tragarmen (20) jeweils ein Ubertragungselement (13) und / oder Umlenkgetriebe (21) eingebunden Ist.

4. Ketten- oder Gleiskettenfahrzeug mit wenigstens einer Vorrichtung nach Anspruch 1, **dadurch gekennzeichnet, dass** der erste Drehfederstab (3, 12₁) am Laufwerksträger und der letzte Drehfederstab (9, 12ₙ) im oder am Wannengehäuse (11) gelagert Ist.

5. Ketten- oder Gleiskettenfahrzeug mit wenigstens einer Vorrichtung nach einem der Ansprüche 1 bis 3, **dadurch gekennzeichnet, dass** die Antriebe- und / oder Übertragungselemente (7-9, 13) frei wählbar sind und beispielsweise Zahnriemen, Zahnräder, Habelmechanismen, Ketten oder dergleichen sein können.

6. Ketten- oder Gleiskettenfahrzeug mit wenigstens einer Vorrichtung nach einem der Ansprüche 1 bis 5, **dadurch gekennzeichnet, dass** die Drehfederstäbe (3-9, 12₁, 12ₙ) Identisch als auch variabel In Ihrer Länge sind.

7. Ketten- oder Gleiskettenfahrzeug mit wenigstens einer Vorrichtung nach einem der Ansprüche 1 bis 5, **dadurch gekennzeichnet, dass** die Drehfederstäbe (3-9, 12₁, 12ₙ) verschieden sind, auch In ihrer Länge.

## Claims

1. Crawler-type or tracked vehicle having at least one device (1, 1') for damping vibrations of a tracked running gear by means of torsion springs or torsion bars, which device has multiple, but at least two, small or short torsion bars (3-6, 12₁, 12ₙ), which are aligned relative to the vehicle hull (10) and which are functionally connected to one another by means of known drive and/or transmission elements (7-9, 13), wherein the torsion bars (3-6) are arranged in a series configuration, parallel configuration or combined parallel and series configuration, and the torsion springs or torsion bars of the device (1') are incorporated along the outside of, and/or the device (1) is incorporated in a side recess in, the vehicle hull (10).

2. Crawler-type or tracked vehicle having at least one device according to Claim 1, **characterized in that** the first torsion bar (3, 12₁) is connected to a carrier arm (20) of a running gear roller (2₁₋ₙ) and the final torsion bar (6, 12ₙ) is mounted in or on the hull housing (11).

3. Crawler-type or tracked vehicle having at least one device according to Claim 2, **characterized in that** in each case one transmission element (13) and/or diverting gear (21) is incorporated between the torsion bars (3-9, 12₁, 12ₙ) and the carrier arms (20).

4. Crawler-type or tracked vehicle having at least one device according to Claim 1, **characterized in that** the first torsion bar (3, 12₁) is mounted on the running gear carrier and the final torsion bar (9, 12ₙ) is mounted in or on the hull housing (11).

5. Crawler-type or tracked vehicle having at least one device according to one of Claims 1 to 3, **characterized in that** the drive and/or transmission elements (7-9, 13) can be selected freely and may for example be toothed belts, gearwheels, lever mechanisms, chains or the like.

6. Crawler-type or tracked vehicle having at least one device according to one of Claims 1 to 5, **characterized in that** the torsion bars (3-9, 12₁, 12ₙ) are identical and also variable in length.

7. Crawler-type or tracked vehicle having at least one device according to one of Claims 1 to 5, **characterized in that** the torsion bars (3-9, 12₁, 12ₙ) are different, including in terms of length.

## Revendications

1. Véhicule à chenilles comprenant au moins un dispositif (1, 1') d'amortissement des vibrations d'un châssis sur chenilles au moyen de barres à ressort de torsion, lequel dispositif comprend plusieurs barres à ressort de torsion petites ou courtes (3-6, 12₁, 12ₙ), mais au moins deux, lesquelles sont orientées à l'opposé du châssis-baquet (10) et sont connectées fonctionnellement les unes aux autres par le biais d'éléments d'entraînement et/ou de transfert (7-9, 13), les barres à ressort de torsion (3-6) étant disposées suivant un montage série, parallèle ou combiné en parallèle et en série, et les barres à ressort de torsion du dispositif (1') étant incorporées à l'extérieur longitudinalement sur, et/ou le dispositif (1) étant incorporé dans une niche latérale dans, le châssis-baquet (10).

2. Véhicule à chenilles comprenant au moins un dispositif selon la revendication 1, **caractérisé en ce que** la première barre à ressort de torsion (3, 12₁) est raccordée à un bras de support (20) d'un galet de roulement (2₁₋ₙ) et la dernière barre à ressort de torsion (6, 12ₙ) est supportée dans ou sur le boîtier de baquet (11).

3. Véhicule à chenilles comprenant au moins un dispositif selon la revendication 2, **caractérisé en ce qu'**entre les barres à ressort de torsion (3-9, 12₁, 12ₙ) et les bras de support (20) est à chaque fois incorporé un élément de transfert (13) et/ou un mécanisme de renvoi (21).

4. Véhicule à chenilles comprenant au moins un dispositif selon la revendication 1, **caractérisé en ce que** la première barre à ressort de torsion (3, 12₁) est supportée sur le support de châssis et la dernière barre à ressort de torsion (9, 12ₙ) est supportée dans ou sur le boîtier de baquet (11).

5. Véhicule à chenilles comprenant au moins un dispositif selon l'une quelconque des revendications 1 à 3, **caractérisé en ce que** les éléments d'entraînement et/ou de transfert (7-9, 13) sont librement sélectionnables et peuvent être par exemple des courroies dentées, des roues dentées, des mécanismes à levier, des chaînes ou similaires.

6. Véhicule à chenilles comprenant au moins un dispositif selon l'une quelconque des revendications 1 à 5, **caractérisé en ce que** les barres à ressort de torsion (3-9, 12₁, 12ₙ) sont de longueurs identiques ainsi que variables.

7. Véhicule à chenilles comprenant au moins un dispositif selon l'une quelconque des revendications 1 à 5, **caractérisé en ce que** les barres à ressort de torsion (3-9, 12₁, 12ₙ) sont différentes, même en longueur.
